# EUROPEAN PATENT APPLICATION

(11) **EP 3 578 870 A1**
(43) Date of publication of application: **11.12.2019**
(21) Application number: 17895189.3
(22) Date of filing: 31.01.2017
(51) Int. Cl.: F17C 11/00

(54) **HYDROGEN STORAGE CARTRIDGE**

(71) Applicant: Japan Blue Energy Co., Ltd., Tokyo 102-0094 (JP); Tokyo University of Science Foundation, Tokyo 162-8601 (JP); Nomura International Co., Ltd., Fukuoka-shi, Fukuoka 810-0001 (JP)
(72) Inventor: DOWAKI, Naoki, Tokyo 102-0094 (JP); KAMEYAMA, Mitsuo, Tokyo 102-0094 (JP); DOWAKI, Kiyoshi, Tokyo 162-8601 (JP); KATAYAMA, Noboru, Tokyo 162-8601 (JP)
(74) Representative: Schwalek, Valérie
(86) International application number: PCT/JP2017/003483
(87) International publication number: WO 2018/142491

(57) **Abstract**

The present invention provides a hydrogen storage cartridge that not only is small and lightweight, but also allows storage and discharge of hydrogen at low pressure and normal temperature. Preferably, it is possible to effectively absorb the volume expansion accompanying atomization of a hydrogen storage alloy that occurs due to repeated storage and discharge of hydrogen, and therefore a hydrogen storage cartridge (A) is provided in which not only is deformation due to repeated use, and in particular irregular deformation, extremely unlikely, but also it is possible to effectively avoid hydrogen storage irregularities of the hydrogen storage alloy. The present invention is a hydrogen storage cartridge (A) used for storage of hydrogen contained in biomass thermal decomposition gas, wherein the material of the hydrogen storage cartridge (A) is pure titanium, and the hydrogen storage cartridge (A) includes in the interior space (1) thereof, as a hydrogen storage alloy, at least one hydrogen storage alloy selected from the group comprising lanthanum mischmetal/nickel, titanium/iron, calcium/nickel, and lanthanum/nickel.

## Description

### Technical Field

The present invention relates to a hydrogen occlusion cartridge used for occluding hydrogen recovered from a biomass pyrolysis gas, more specifically to a hydrogen occlusion cartridge which is used as a hydrogen supply source for an apparatus using hydrogen in such a way that the cartridge is connected to the apparatus to emit occluded hydrogen.

### Background Art

In recent years, automobiles not discharging exhaust gas which becomes a source of environmental pollution have been attracting attention from the points of view of suppression of carbon dioxide emission and prevention of environmental pollution. An example thereof is an electric automobile, and another example thereof is a fuel cell automobile. Accordingly, electric automobiles are in the spread stage, and preparations are underway for spreading fuel cell automobiles.

On the other hand, mobile information terminal devices such as mobile phones and smartphones as well as simplified transportation equipment such as drones are also becoming widespread. Currently, as a power source of the electric automobiles, drones, and mobile information terminal devices a lithium ion battery is utilized. In order to improve the mileage of the electric automobiles and improve the flight distance of the drones, as well as prolong the battery life of the mobile terminals, the performance of the lithium ion battery is being improved. As a measure other than improvement of the performance of the lithium ion battery, an instrument for power supply is to be developed and commercialized in which a fuel cell and a hydrogen storage container (e.g., cartridge) are integrated. As this kind of hydrogen storage container, hydrogen storage containers using a hydrogen occlusion alloy, and a carbon-based porous material, an inorganic complex-based materials, an organic chemical hydride, and the like have been studied. Thus, in recent years, an apparatus integrated with a fuel cell and a hydrogen storage cartridge, and a hydrogen cartridge as a hydrogen storage container have attracted attention in various industries, and it is expected that the demand will be greatly increased.

As techniques for storing and transporting hydrogen, other than a method using a cartridge comprising hydrogen occlusion alloys, a method in which hydrogen is charged into a high-pressure gas cylinder, and stored and transported in that state; a method in which an organic solvent such as naphthalene or toluene is hydrogenated (e.g., naphthalene is transported in a form of tetralin, or toluene is transported in a form of methylcyclohexane), and then separated into naphthalene or toluene and hydrogen at each demander so as to utilize hydrogen, and the like have been proposed.

In the method of charging hydrogen into the high-pressure gas cylinder, hydrogen is charged normally at a pressure of as high as 20 MPa. Recently, gas cylinders at 35 MPa and 70 MPa for fuel cell automobiles have been developed, gas cylinders at 35 MPa have been put to practical use, and also gas cylinders at 70 MPa are being put to practical use. This method requires very high pressure, and apparatuses and containers for charging hydrogen must be treated as pressurized containers and should be operated under a strict control.

In the method of hydrogenating, storing and transporting an organic solvent such as naphthalene and toluene, an equipment for hydrogenating naphthalene, toluene or the like is required, and furthermore a reaction equipment for releasing hydrogen at a transport destination is required. Furthermore, the method is efficient in storage and transportation but is not suitable for general users, because equipment for storing and charging the released hydrogen are required.

There is a known apparatus which is a hydrogen supply cartridge for supplying hydrogen to a fuel cell or the like, in which a hydrogen occlusion alloy is charged into the cartridge and hydrogen is occluded into the hydrogen occlusion alloy. For example, there is a known fuel cartridge for a fuel cell which characteristically includes a first chamber for containing a liquid substance involved in a hydrogen-generating reaction, a second chamber having a hydrogen outlet, accommodating a solid substance involved in the hydrogen-generating reaction and reacting the solid substance with the liquid substance, a hydrogen occlusion alloy disposed in the second chamber, and a liquid transport medium for transporting the liquid substance from the first chamber to the second chamber (Patent Document 1). More specifically, a hydrogen-generating substance (solid substance) such as a metal-hydrogen complex compound, a metal, an enzyme, a microorganism and a catalyst, a hydrogen occlusion alloy for occluding and storing generated hydrogen, and a liquid substance e.g. water, an inorganic acid, an organic acid, alcohol or the like which reacts with a hydrogen-generating substance (solid substance) to generate hydrogen are put into one cartridge, the hydrogen-generating substance (solid substance) is reacted with the liquid substance to generate hydrogen, the generated hydrogen is supplied to a small fuel cell to generate electricity, e.g. to supply power to a portable electronic apparatus. In the invention, hydrogen is obtained from the hydrogen-generating substance in the cartridge, and the hydrogen occlusion alloy temporarily occludes surplus hydrogen obtained from the hydrogen-generating substance, and an object of the invention is to thereby reduce losses of the hydrogen release. Hydrogen occluded in the hydrogen occlusion alloy is not used as the main hydrogen source. In addition, this apparatus is not easy to reconstruct the apparatus after completion of the hydrogen supply i.e. to recharge the hydrogen-generating substance (solid substance) and the liquid substance. Also, it is not easy to miniaturize and lighten the apparatus, and therefore the apparatus is poor in versatility.

There is a known hydrogen supply cartridge which can be connected to an apparatus using hydrogen, and characteristically has a container capable of accommodating a hydrogen-generating substance capable of generating hydrogen by reaction, and a hydrogen removal apparatus for removing the surplus of the generated hydrogen to prevent hydrogen from dissipating outside (Patent Document 2). More specifically, in the apparatus, metals such as aluminum, silicon, zinc and magnesium, an alloy mainly composed of these metal elements, a metal hydride, and the like are used as hydrogen-generating substances, which are reacted with water to generate hydrogen, the generated hydrogen is supplied to a fuel cell, and simultaneously the surplus hydrogen is occluded and stored in the a hydrogen occlusion alloy, and the hydrogen-generating substance and the hydrogen occlusion alloy are accommodated in one cartridge. An object of the invention is to reduce hydrogen loss without discharging the surplus hydrogen, by occluding the surplus hydrogen into the hydrogen occlusion alloy. Hydrogen occluded in the hydrogen occlusion alloy is not used as the main hydrogen source. Even in this apparatus, much work is required for reconstructing the apparatus after completion of the hydrogen supply, i.e. recharging the hydrogen-generation substance and water, and it is not also easy to miniaturize and lighten the apparatus, and therefore the apparatus is poor in versatility.

There is a known apparatus in which a hydrogen-generating substance is not charged in a cartridge, a large amount of hydrogen is occluded into a hydrogen occlusion alloy or a hydrogen occlusion material such as a carbonaceous material, and hydrogen is emitted and used. For example, there is a known hydrogen occlusion and emission apparatus equipped with a pressure-resistant container made of a material selected from a group consisting of an iron-based metal, an aluminum-based metal, a titanium-based metal, a polyimide resin, a fluorine resin, a polycarbonate resin, a pressure-resistant glass, a carbon fiber and a ceramic, which includes a cartridge having an outer diameter smaller than an inner diameter of the pressure-resistant container, having an outer peripheral wall portion and bottom wall portion made of a porous material, and capable of accommodating a hydrogen occlusion material thereinside; a holding means for holding the cartridge in the pressure-resistant container so that the bottom wall portion of the cartridge is located apart from the bottom face of the pressure-resistant container and the outer peripheral wall portion is located apart from the inner side face of the pressure-resistant container; a gas passage connected to the pressure-resistant container; a valve disposed in the gas passage; and a hydrogen gas supply source connected to the inside of the pressure-resistant container through the gas passage, wherein the cross section of the cartridge is annular, and the inner peripheral wall portion of the cartridge is made of a porous material (Patent Document 3). An object of the invention is to transport a large amount of hydrogen, and preferably to provide a cartridge containing a pressure-resistant container made of stainless steel preferably accommodating a carbon nanotube. Then, in order to previously remove impurities adhering to the surface of the carbon nanotube, the carbon nanotube is heated under a nitrogen gas atmosphere at 800 to 1000°C for about 3 hours, or in another aspect, heated under reduced pressure at 400 to 800°C for about 3 hours, and then hydrogen is supplied to and stored in the pressure-resistant container at a remarkably high pressure of 100 atm. As described above, in the invention, since considerable high temperature and high pressure are required for storing hydrogen, a huge apparatus cost is required and furthermore it is difficult to miniaturize and lighten the apparatus.

### Prior Art Documents

### Patent Documents

Patent Document 1: JP Pat. No. 4261918
Patent Document 2: Japanese Unexamined Patent Application Publication No. 2009-221072
Patent Document 3: Japanese Unexamined Patent Application Publication No. 2002-228099
Patent Document 4: JP Pat. No. 4246456
Patent Document 5: JP Pat. No. 5463050

### Summary of Invention

### Problem to be solved

The present invention provides a hydrogen occlusion cartridge which is not only compact and lightweight but also capable of occluding and emitting hydrogen at low pressure and normal temperature. Preferably, the present invention provides a hydrogen occlusion cartridge which not only can significantly reduce deformation due to repeated use, particularly ununiform deformation but also can effectively avoid hydrogen occlusion unevenness of the hydrogen occlusion alloy, because the cartridge can effectively absorb volume expansion accompanying pulverization of the hydrogen occlusion alloy caused by repeated hydrogen absorption and emission.

### Solution to Problem

As described above, conventionally, many cartridges filled with the hydrogen occlusion alloy did not use hydrogen occluded in the hydrogen occlusion alloy as a main hydrogen source, and the hydrogen occlusion alloy was used to reduce hydrogen emission loss by temporarily occluding the surplus hydrogen emitted from the hydrogen-generating substance charged into the cartridge (Patent Documents 1 and 2). Also, there was a known apparatus having no hydrogen-generating substance in the cartridge and using the charged hydrogen as a main hydrogen source (Patent Document 3). However, the apparatus required considerably high temperature and pressure for occluding and emitting hydrogen. In this case, the apparatus could not be used as a power source for small equipment e.g. a portable information terminal device such as a smartphone, and also could not be used as a power source for an electric automobile, a drone or the like, or was extremely unsuitable for the power source. In addition, it was not easy to recharge hydrogen into the used cartridge, and there were a lot of problems in reuse of the cartridge.

Thus, the present inventors variously studied how to miniaturize and lighten the cartridge to be filled with hydrogen and how to facilitate the recharge of hydrogen. As a result, they found that a cartridge itself could be extremely lightened and miniaturized, hydrogen could be charged and emitted at low pressure and normal temperature, and furthermore hydrogen could be easily recharged into the used cartridge, by selecting pure titanium as a material constituting the cartridge, using a hydrogen occlusion alloy, and using the below-mentioned materials as the hydrogen occlusion alloy, and therefore the cartridge could be reused.

In addition, the cartridge filled with the hydrogen occlusion alloy is miniaturized and lightened, and is incorporated in an apparatus using hydrogen e.g. a portable information terminal device such as a smartphone, an electric automobile, a drone, or the like. When the cartridge is used while repeating occlusion, emission, occlusion and emission of hydrogen, i.e. repeating recharge of hydrogen, the cartridge itself is repeatedly heated and cooled by receiving the heat absorption and heat release actions of the hydrogen occlusion alloy in association with the emission and occlusion of hydrogen. Thereby, the hydrogen occlusion alloy is pulverized and expanded in volume. Consequently, the cartridge itself repeatedly expands and contracts, and the charged hydrogen occlusion alloy is expanded in volume to cause deformation, particularly ununiform deformation on the cartridge itself. In some cases, this may lead to destruction of an apparatus using hydrogen, e.g. a portable information terminal device or the like during use. Thus, the cartridge should effectively absorb the expansion and contraction of the cartridge itself and the volumetric expansion of the hydrogen occlusion alloy depending on the temperature change associated with the emission and occlusion of hydrogen to prevent deformation, particularly ununiform deformation of the cartridge itself.

Thus, the present inventors conducted further studies, and as a result, they found that deformation, particularly ununiform deformation of the cartridge itself could be prevented preferably by disposing a partitioning plate in the cartridge, forming a plurality of chambers by the partitioning plate, and dimensioning the partitioning plate to a predetermined dimension, and this finding led to completion of the present invention.

That is, the present invention relates to (1) a hydrogen occlusion cartridge used for occluding hydrogen recovered from a biomass pyrolysis gas, wherein a material for the hydrogen occlusion cartridge is pure titanium, and an inner space of the hydrogen occlusion cartridge contains one or more selected from a group consisting of a lanthanum mischmetal-nickel type hydrogen occlusion alloy, a titanium-iron type hydrogen occlusion alloy and a calcium-nickel type hydrogen occlusion alloy as hydrogen occlusion alloys.

Preferable aspects include:
(2) The hydrogen occlusion cartridge according to (1), wherein the hydrogen occlusion alloy is one or more selected from a group consisting of LmNi₄.₇₃Mn_{0.12}Al_{0.15} (lanthanum mischmetal-nickel 4.73 type), TiFe_{0.9}Mn_{0.1} (titanium-iron 0.9 type), Fe_{0.94}Ti_{0.96}Zr_{0.04}Nb_{0.04} (titanium-iron 0.94 type), CaNi₅ (calcium-nickel type), and Lm-Ni type alloy (3) (lanthanum mischmetal-nickel type);
(3) The hydrogen occlusion cartridge according to (1) or (2), wherein the hydrogen occlusion alloy contains 90% or more of particles having particle diameters of 0.1 to 3.0 mm in a particle size distribution;
(4) The hydrogen occlusion cartridge according to any one of (1) to (3), wherein a shape of the inner space of the hydrogen occlusion cartridge is substantially rectangular parallelepiped;
(5) The hydrogen occlusion cartridge according to any one of (1) to (4), wherein the inner space of the hydrogen occlusion cartridge comprises a plurality of chambers for accommodating the hydrogen occlusion alloy, which are separated by at least one partitioning plate;
(6) The hydrogen occlusion cartridge according to (5), wherein the number of the plurality of chambers is 2 to 10;
(7) The hydrogen occlusion cartridge according to (5), wherein the number of the plurality of chambers is 2 to 7;
(8) The hydrogen occlusion cartridge according to (5), wherein the number of the plurality of chambers is 2 to 5;
(9) The hydrogen occlusion cartridge according to (5), wherein the number of the plurality of chambers is 3 to 5;
(10) The hydrogen occlusion cartridge according to any one of (5) to (9), wherein a dimension of the partitioning plate in a longitudinal direction is 70 to 80% of a total length of a dimension of the inner space of the hydrogen occlusion cartridge in the same direction as the longitudinal direction of the partitioning plate, and a dimension of the partitioning plate in a transverse direction is equal to a total length of a dimension of the inner space of the hydrogen occlusion cartridge in the same direction as the transverse direction of the partitioning plate;
(11) The hydrogen occlusion cartridge according to any one of (5) to (9), wherein the dimension of the partitioning plate in the longitudinal direction is 73 to 77% of the total length of the dimension of the inner space of the hydrogen occlusion cartridge in the same direction as the longitudinal direction of the partitioning plate, and the dimension of the partitioning plate in the transverse direction is equal to the total length of the dimension of the inner space of the hydrogen occlusion cartridge in the same direction as the transverse direction of the partitioning plate;
(12) The hydrogen occlusion cartridge according to any one of (5) to (11), wherein the partitioning plate is substantially flat-shaped and substantially perpendicular to each face of the inner space of the hydrogen occlusion cartridge;
(13) The hydrogen occlusion cartridge according to any one of (1) to (12), wherein a hydrogen occlusion pressure in the hydrogen occlusion cartridge is 0.15 to 0.6 MPa;
(14) The hydrogen occlusion cartridge according to any one of (1) to (13), wherein a hydrogen occlusion temperature in the hydrogen occlusion cartridge is -80 to 30°C;
(15) The hydrogen occlusion cartridge according to any one of (1) to (14), wherein a hydrogen emission temperature in the hydrogen occlusion cartridge is 0 to 100°C;
(16) The hydrogen occlusion cartridge according to any one of (1) to (15) for a portable information terminal devices, an electric automobile or a drone.

### Effects of Invention

Since the hydrogen occlusion cartridge according to the present invention is not only compact and lightweight but also capable of occluding and emitting hydrogen at low pressure and normal temperature, it can be easily transported and handled and is safe. In addition, since the cartridge hardly causes deformation due to repeated use, the cartridge itself can be used repeatedly for a long period, and when the cartridge is incorporated in an apparatus using hydrogen and repeatedly used, there is no possibility of destruction of the apparatus. In addition, since there is no hydrogen occlusion unevenness, the cartridge can always exhibit a constant performance during use.

### Brief Description of Drawings

[FIG. 1] FIG. 1 illustrates an appearance drawing showing one embodiment of a hydrogen occlusion cartridge according to the present invention.
[FIG. 2] FIG. 2 illustrates a front view of the hydrogen occlusion cartridge shown in FIG. 1 from the view of a side of hydrogen ports, a I-I sectional view, and a II-II sectional view.

### Description of Embodiments

The material for the hydrogen occlusion cartridge according to the present invention is pure titanium, preferably pure titanium 2. Thereby, deformation and distortion of the cartridge itself due to heat generation and heat absorption during hydrogen occlusion and emission can be reduced. In addition, the hydrogen occlusion cartridge according to the present invention has an inner space thereinside, and the inner space includes, as the hydrogen occlusion alloys, one or more selected from a group consisting of a lanthanum mischmetal-nickel type hydrogen occlusion alloy, a titanium-iron type hydrogen occlusion alloy, and a calcium-nickel type hydrogen occlusion alloy. Preferably, one or more selected from a group consisting of LmNi₄.₇₃Mn_{0.12}Al_{0.15} (lanthanum mischmetal-nickel 4. 73 type), TiFe_{0.9}Mn_{0.1} (titanium-iron 0.9 type), Fe_{0.94}Ti_{0.96}Zr_{0.04}Nb_{0.04} (titanium-iron 0.94 type), CaNi₅ (calcium-nickel type), and Lm-Ni type alloy (3) (lanthanum mischmetal-nickel type) are included. Use of these hydrogen occlusion alloys makes it possible to occlude and emit hydrogen at relatively low pressure and normal temperature (25°C). The hydrogen occlusion pressure is preferably 0.15 to 0.6 MPa, more preferably 0.3 to 0.4 MPa. The hydrogen occlusion temperature is preferably -80 to 30°C, meanwhile the hydrogen emission temperature is preferably 0 to 100°C. More preferably, both the hydrogen occlusion and hydrogen emission are carried out at ambient temperature e.g. normal temperature (25°C). However, since the hydrogen occlusion alloy generates heat during hydrogen occlusion, the hydrogen occlusion and hydrogen emission can also be carried out at the temperature within the above range while cooling with water or ice bath. On the other hand, since the hydrogen occlusion alloy absorbs heat during hydrogen emission, the hydrogen occlusion and hydrogen emission can also be carried out at the temperature within the above range while heating with a hot water bath, preferably at 80 to 90°C. Herein, since the hydrogen occlusion temperature and the hydrogen emission temperature depend on an occlusion rate of hydrogen to the hydrogen occlusion alloy and an emission rate of hydrogen from the hydrogen occlusion alloy, the hydrogen occlusion temperature and the hydrogen emission temperature can be controlled to appropriate temperatures by appropriately adjusting the hydrogen occlusion rate and the hydrogen emission rate. For example, when hydrogen is collectively occluded into the hydrogen occlusion alloy at a factory or the like, the occlusion can be efficiently carried out by increasing the hydrogen occlusion rate while cooling the hydrogen occlusion cartridge. On the other hand, when the hydrogen occlusion cartridge is used e.g. for a portable information terminal device such as a smartphone, the emission rate of hydrogen emitted from the hydrogen occlusion alloy is low, therefore the hydrogen emission temperature i.e. temperatures of the hydrogen occlusion cartridge and the smartphone themselves are not rapidly decreased, and their temperatures are somewhat lower than normal temperature (25°C), and rather the temperatures are advantageous because an effect of cooling the smartphone itself can be expected. In relation to the particle size of the hydrogen occlusion alloy at the initial charging, a maximum particle diameter is preferably 1 mm or less. The hydrogen occlusion alloy is pulverized by repeating occlusion and emission of hydrogen.

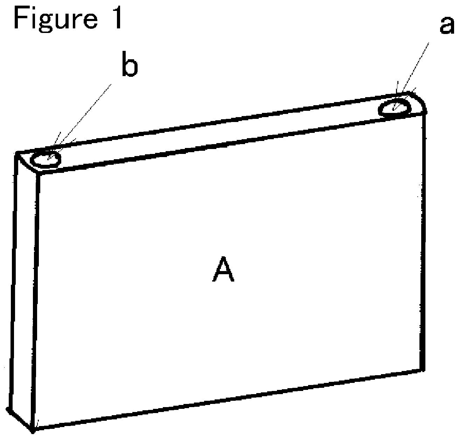

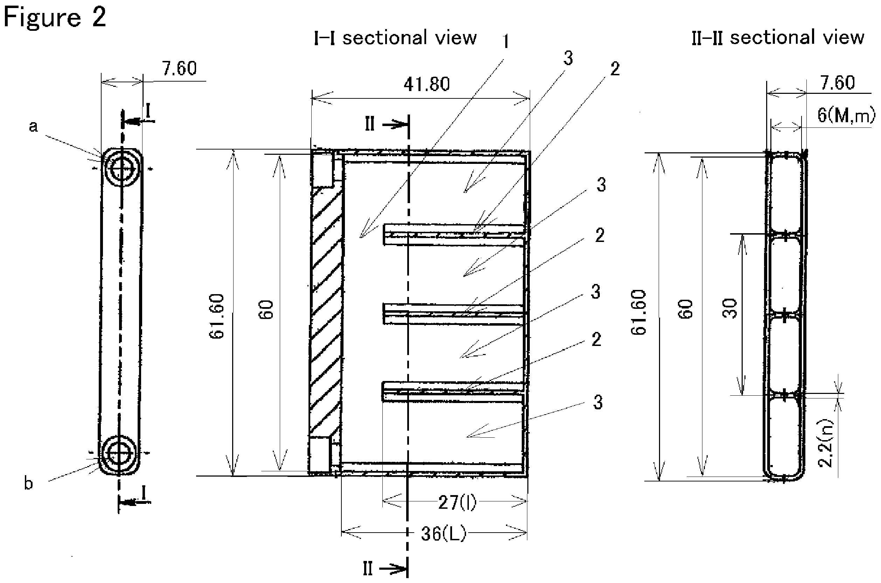

Hereinafter, the hydrogen occlusion cartridge according to the present invention will be explained with reference to FIGs. 1 and 2. Herein, FIG. 1 illustrates an appearance drawing showing one embodiment of a hydrogen occlusion cartridge according to the present invention, and FIG. 2 illustrates a front view, a I-I sectional view, and a II-II sectional view of the hydrogen occlusion cartridge shown in FIG. 1 viewed from the side of hydrogen ports. The hydrogen occlusion cartridge (A) according to the present invention shown in FIG. 1 comprises two hydrogen ports (a, b). Hydrogen is supplied from the hydrogen ports (a, b), and occluded to the hydrogen occlusion alloy charged in the hydrogen occlusion cartridge (A). When hydrogen is occluded into the hydrogen occlusion alloy, hydrogen is usually supplied from one hydrogen port e.g. port (a), and at this time, the other hydrogen port e.g. port (b) is closed. Then, hydrogen is supplied to the cartridge (A) while maintaining the aforementioned hydrogen occlusion pressure and temperature. Although the hydrogen supply rate is determined depending on an inner space volume of the hydrogen occlusion cartridge (A), an amount of the hydrogen occlusion alloy, and the like, it is preferably 0.1 to 3 L/min, more preferably 0.5 to 1 L/min. As such, hydrogen occluded into the hydrogen occlusion alloy is connected to an apparatus using hydrogen e.g. a portable information terminal device, an electric automobile, a drone, or the like for use, maintained at the aforementioned hydrogen emission pressure and temperature, and emitted depending on each amount of hydrogen used in the apparatuses using hydrogen. When emitting hydrogen, hydrogen is usually emitted from the hydrogen port other than the port which has supplied hydrogen e.g. the port (b). Of course, the present invention is not limited to this aspect.

In the hydrogen occlusion cartridge (A) according to the present invention, both its external shape and the shape of the inner space (1) are preferably substantially rectangular parallelepiped. The external shape may be sure variously changed depending on the shape of the apparatus using hydrogen to which the hydrogen occlusion cartridge (A) is attached. In addition, the inner space (1) of the hydrogen occlusion cartridge (A) is divided by at least one partitioning plate (2) and comprises a plurality of chambers (3) for accommodating the hydrogen occlusion alloy. In relation to the plurality of chambers (3), the inner space (1) of the hydrogen occlusion cartridge (A) comprises preferably 2 to 10 chambers, more preferably 2 to 7 chambers, even more preferably 2 to 5 chambers, still more preferably 3 to 5 chambers. If the inner space (1) of the hydrogen occlusion cartridge (A) is not divided by the partitioning plate (2) and the number of the chambers (3) is only one, when the hydrogen occlusion alloy is pulverized and expanded in volume by repeating occlusion and emission of hydrogen, the hydrogen occlusion alloy is biased in the inner space (1) of the hydrogen occlusion cartridge (A), and therefore hydrogen occlusion unevenness is likely to be caused in recharging hydrogen. In addition, once the hydrogen occlusion alloy is biased, deformation or distortion is readily caused on a part of the hydrogen occlusion cartridge (A) by volumetric expansion of the hydrogen occlusion alloy on the part so that the apparatus may be deformed and destroyed when the cartridge is used in connection with an apparatus using hydrogen e.g. a portable information terminal device or the like. When a plurality of, preferably 2 or more, more preferably 3 or more chambers (3) are provided as described above, the hydrogen occlusion alloy can be dispersed in the plurality of chambers (3) and freely move among the chambers (3) to prevent bias of the hydrogen occlusion alloy. As a result, influence of the expanded hydrogen occlusion alloy can be effectively absorbed, and deformation and distortion of the hydrogen occlusion cartridge (A) can be prevented. Also, the hydrogen occlusion unevenness of the hydrogen occlusion alloy can be prevented. It is unpreferable that the number of the chambers (3) for accommodating the hydrogen occlusion alloy is above the aforementioned upper limit because the manufacturing cost of the hydrogen occlusion cartridge (A) increases, and besides that, bias of the hydrogen occlusion alloy cannot be prevented in some cases. Herein, the charged amount of the hydrogen occlusion alloy is preferably 70 to 95% by volume, more preferably 80 to 90% by volume of the total volume of the inner space of the hydrogen occlusion cartridge (A). If the charged amount of the hydrogen occlusion alloy is too high, bias of the alloy cannot be prevented due to expansion of the hydrogen occlusion alloy in some cases. It is preferable that the hydrogen occlusion alloy is almost uniformly dispersed in the plurality of chambers (3), and typically the hydrogen occlusion alloy occupies preferably 70 to 95% by volume, more preferably 80 to 90% by volume of the inner space volume of each chamber (3).

A dimension (I) of the partitioning plate (2) in a longitudinal direction is preferably 70 to 80%, more preferably 73 to 77% of a total length of a dimension (L) of the inner space (1) of the hydrogen occlusion cartridge (A) in the same direction as a longitudinal direction of the partitioning plate (2). If the dimension (I) of the partitioning plate (2) in the longitudinal direction exceeds the aforementioned upper limit, the particulate or powdery hydrogen storage alloy cannot smoothly pass through the spaces between the partitioning plate (2) and the face of the inner space (1) of the hydrogen occlusion cartridge (A), and it becomes impossible to prevent bias of the hydrogen occlusion alloy in the inner space (1) in some cases. On the other hand, if the dimension (I) of the partitioning plate (2) in the longitudinal direction is below the aforementioned lower limit, the partitioning plate (2) cannot sufficiently play the role for itself, and similarly it becomes impossible to prevent bias of the hydrogen occlusion alloy in some cases. Also, a dimension (m) of the partitioning plate (2) in a transverse direction is equal to a total length of a dimension (M) of the inner space (1) of the hydrogen occlusion cartridge (A) in the same direction as the transverse direction of the partitioning plate (2). Thereby, the inner space (1) of the hydrogen occlusion cartridge (A) is completely walled in the transverse direction of the partitioning plate (2) i.e. in the thickness direction of the inner space (1) of the hydrogen occlusion cartridge (A), to form each chamber. In addition, it is preferable that the partitioning plate (2) is substantially flat-shaped and substantially perpendicular to each face of the inner space (1) of the hydrogen occlusion cartridge (A). When a plurality of partitioning plates (2) are provided, it is preferable that the partitioning plates (2) are substantially parallel to each other, and located so that the dimensions (volumes) of the inner spaces (1) are substantially equal to each other.

The hydrogen occlusion cartridge according to the present invention is used for occluding hydrogen recovered from a biomass pyrolysis gas. Herein, the biomass is not particularly limited if it is described in Patent Document 4, but includes e.g. a waste material from palm tree (empty fruit bunch: EFB, EFB fiber, palm kernel shell), coconut shell, coconut husk, a waste material from Jatropha tree, an unused waste wood from forests, a sawmill waste from a sawmilling factory, waste paper, rice straw, rice husk, food residue from a food factory, algae, sewage sludge, organic sludge, and the like. In addition, hydrogen recovered from a biomass pyrolysis gas includes hydrogen recovered from a biomass pyrolysis gas obtained by pyrolyzing the above-descried biomass, hydrogen recovered from a biomass obtained by further reforming the pyrolysis gas, or the like. Methods and apparatuses for producing the pyrolysis gas by heat-treating the above-described biomass are known. The following methods are given as examples: a method comprising: heat-treating biomass such as organic waste at 500-600 °C under a non-oxidizing atmosphere; mixing the generated pyrolysis gas with steam at 900-1,000 °C; and purifying the resulting reformed gas to recover hydrogen (Patent Document 4); or a method for gasifying organic waste, comprising: heat-treating organic waste at 400- 700 °C under a non-oxidizing atmosphere; mixing the generated pyrolysis gas with steam at 700-1,000 °C; and purifying the resulting reformed gas to produce hydrogen-containing gas, wherein: purifying the reformed gas is carried out by passing the reformed gas through a layer containing aluminum oxide and/or a formed article thereof and kept at 400-700 °C and then further passing the resulting gas through a layer containing one or more substances selected from a group consisting of zinc oxide, iron oxide, calcium oxide and formed articles thereof and kept at 350-500 °C; and subsequently the reformed gas after the purification is passed through a shift reaction catalyst layer at 200-500 °C (Patent Document 5). Furthermore, a method for separating hydrogen from the gas thus obtained and purifying the gas is also known. Other than the above-described method, a method for separating hydrogen by using PSA etc. or the like is known, for example.

The hydrogen occlusion cartridge according to the present invention can be connected to an apparatus using hydrogen, and can be used as a power source for an apparatus using hydrogen e.g. a portable information terminal devices such as a smartphone or as a power source for an electric automobile, drone and the like, by emitting hydrogen occluded to a hydrogen occlusion alloy charged into the cartridge. Also, the hydrogen occlusion cartridge can be used as a small-sized battery by installing a small fuel cell, an electric capacitor or the like in the inner space of the hydrogen occlusion cartridge.

Hereinafter, the present invention will be described in more detail with reference to Examples, but the present invention is not limited by these Examples.

### (Example 1)

A hydrogen occlusion cartridge (A) made of pure titanium 2 having the shapes and dimensions shown in FIG. 1 and 2 was prepared. As shown in FIG. 2, the hydrogen occlusion cartridge (A) had substantially rectangular parallelepiped external shape and inner space (1), and the dimension of the cartridge (A) was 41.80 mm in length, 61.60 mm in width, and 7.60 mm in thickness, and the dimension was substantially equal to that of a general smartphone lithium ion battery. The dimension of the inner space (1) of the cartridge (A) was 36 mm in length, 60 mm in width, and 6 mm in thickness, and the inner space (1) was almost uniformly divided in the lateral direction by 3 partitioning plates (2) substantially parallel to each other, and had 4 chambers (3) for accommodating the hydrogen occlusion alloy. All of the partitioning plates (2) were substantially flat-shaped and substantially perpendicular to each face of the inner space (1) of the hydrogen occlusion cartridge (A). The dimension (I) of each partitioning plate (2) in the longitudinal direction was 27 mm, and the total length (L) of the dimension of the cartridge inner space (1) in the same direction as the longitudinal direction of the partitioning plate (2) (lengthwise direction of the inner space (1)) was 36 mm. As described above, the dimension (I) of the partitioning plate (2) in the longitudinal direction was 75% of the total length (L) of the dimension of the cartridge inner space (1) in the same direction as the longitudinal direction of the partitioning plate (2) (lengthwise direction of the inner space (1)). On the other hand, the dimension of the partitioning plate (2) in the transverse direction was 6 mm, which was equal to the total length (M) of 6 mm of the dimension of the cartridge inner space (1) in the same direction as the transverse direction of the partitioning plate (2) (thickness direction of the inner space (1)). All of the partitioning plates (2) had such a shape that a width (n) of a part close to the center was 2.2 mm and the width was somewhat widened toward both ends. In addition, the internal volumes of the individual chambers (3) for accommodating the hydrogen occlusion alloy were substantially equal to each other, and the total volume of the 4 chambers was about 8 cc. The total weight of the hydrogen storage cartridge (A) was about 38 g. This weight was about 30% of a weight (about 133 g) of a hydrogen occlusion cartridge made of stainless steel (SUS304) having the same shape and dimension.

In the 4 chambers (3) in the hydrogen occlusion cartridge (A) made of pure titanium 2, about 56 g of LmNi₄.₇₃Mn_{0.12}Al_{0.15} as the hydrogen occlusion alloy was charged in such a way that the alloy was dispersed almost evenly in the individual chambers.

The hydrogen occlusion cartridge (A) was immersed in ice water to maintain a temperature of the entire cartridge (hydrogen occlusion temperature) at about 0°C. Separately, a commercially available hydrogen cylinder (internal volume: 7 m³, pressure: 15 MPa, purity: 99.9%) was prepared. Subsequently, hydrogen is supplied to the hydrogen occlusion cartridge (A) from the cylinder with a hydrogen supply pressure constantly maintained at 0.4 MPa and a hydrogen supply rate of about 1 L/min to occlude hydrogen to the hydrogen occlusion alloy. At this step, in the latter half of the hydrogen occlusion operation, the hydrogen supply rate was gradually decreased from about 1 L/min at the start, with an increase in pressure in the hydrogen occlusion cartridge (A). At the completion of the hydrogen occlusion, the pressure in the hydrogen occlusion cartridge (A) (hydrogen occlusion pressure) was increased to about 0.4 MPa from an atmospheric pressure at the start of the hydrogen occlusion.

After hydrogen was occluded as described above, the hydrogen occlusion cartridge (A) was left in a room at about 25°C to maintain the temperature of the entire cartridge (A) at about 25°C. Subsequently, in the room, hydrogen was emitted from the hydrogen occlusion cartridge (A) at a rate of about 1 L/min. At this step, in the latter half of the hydrogen emission operation, the hydrogen emission rate was gradually decreased from about 1 L/min at the start. At this step, in the end of the hydrogen emission, the pressure in the hydrogen occlusion cartridge (A) was decreased to substantially atmosphere pressure from about 0.4 MPa at the start of the hydrogen emission. The temperature in the hydrogen occlusion cartridge (A) (hydrogen emission temperature) was gradually decreased from about 25°C at the start of the hydrogen emission, in association with the hydrogen emission. At the completion of hydrogen emission, the cartridge was at such a temperature that a cold feeling was given when the cartridge was touched by hand.

The above operations of hydrogen occlusion and hydrogen emission were repeated three times. At this time, the hydrogen occlusion amount and the hydrogen emission amount in each step are shown in the following Table 1. All of the units of the numerical values in Table 1 are expressed as normal liters.

### [Table 1]

**Table 1**

| | First Operation | Second Operation | Third Operation |
|---|---|---|---|
| Hydrogen Occlusion Ammount | 7.972 | 7.930 | 8.001 |
| Hydrogen Emission Ammount | 7.003 | 7.245 | 7.666 |

Table 1 clarified that the hydrogen occlusion amount to the hydrogen occlusion cartridge (A) and the hydrogen emission amount from the hydrogen occlusion cartridge (A) were substantially equal even when repeating the operations of hydrogen occlusion and hydrogen emission three times, and the hydrogen occlusion cartridge had a constant performance. In addition, even after three repetitions, no deformation of the hydrogen occlusion cartridge (A) itself was observed. As described above, although the hydrogen occlusion cartridge (A) according to the present invention was compact and lightweight, the cartridge could occlude a large volume of hydrogen, and did not lack performances of hydrogen occlusion and emission even when repeating occlusion and emission, and additionally the cartridge itself was not deformed.

### Industrial Applicability

The hydrogen occlusion cartridge according to the present invention can be easily transported and handled and is safe. In addition, the cartridge can be not only used repeatedly for a long period, but also incorporated in an apparatus using hydrogen and repeatedly used without destruction of the apparatus, and expected to always exhibit a constant performance during use. Hence, in the future, it is greatly expected that the cartridge is incorporated and used not only in a portable information terminal devices e.g. an extremely small-sized device such as a smartphone but also in an electric automobile, drone, or the like.

### Reference Numerals

A Hydrogen occlusion cartridge according to the present invention
a Hydrogen port
b Hydrogen port
L Dimension of inner space of hydrogen occlusion cartridge in the same direction as longitudinal direction of partitioning plate
I Dimension of partitioning plate in longitudinal direction
M Dimension of inner space of hydrogen occlusion cartridge in the same direction as transverse direction of partitioning plate
m Dimension of partitioning plate in transverse direction
n Width of partitioning plate
1 Inner space of hydrogen occlusion cartridge
2 Partitioning plate
3 Chambers for accommodating hydrogen occlusion alloy

## Claims

1. A hydrogen occlusion cartridge used for occluding hydrogen recovered from a biomass pyrolysis gas, wherein a material for the hydrogen occlusion cartridge is pure titanium, and an inner space of the hydrogen occlusion cartridge contains one or more selected from a group consisting of a lanthanum mischmetal-nickel type hydrogen occlusion alloy, a titanium-iron type hydrogen occlusion alloy and a calcium-nickel type hydrogen occlusion alloy as hydrogen occlusion alloys.

2. The hydrogen occlusion cartridge according to claim 1, wherein
a shape of the inner space of the hydrogen occlusion cartridge is substantially rectangular parallelepiped,
the inner space of the hydrogen occlusion cartridge comprises a plurality of chambers for accommodating the hydrogen occlusion alloy, which are separated by at least one partitioning plate,
a dimension of the partitioning plate in a longitudinal direction is 70 to 80% of a total length of a dimension of the inner space of the hydrogen occlusion cartridge in the same direction as the longitudinal direction of the partitioning plate, and
a dimension of the partitioning plate in a transverse direction is equal to a total length of a dimension of the inner space of the hydrogen occlusion cartridge in the same direction as the transverse direction of the partitioning plate.

3. The hydrogen occlusion cartridge according to claim 1, wherein
a shape of the inner space of the hydrogen occlusion cartridge is substantially rectangular parallelepiped,
the inner space of the hydrogen occlusion cartridge comprises a plurality of chambers for accommodating the hydrogen occlusion alloy, which are separated by at least one partitioning plate,
a dimension of the partitioning plate in a longitudinal direction is 70 to 80% of a total length of a dimension of the inner space in the same direction as the longitudinal direction of the partitioning plate,
a dimension of the partitioning plate in a transverse direction is equal to a total length of a dimension of the inner space in the same direction as the transverse direction of the partitioning plate, and
the partitioning plate is substantially flat-shaped and substantially perpendicular to each face of the inner space of the hydrogen occlusion cartridge.

4. The hydrogen occlusion cartridge according to claim 2 or 3, the number of the plurality of chambers is 2 to 10.

5. The hydrogen occlusion cartridge according to any one of claims 1 to 4, wherein the hydrogen occlusion alloy is one or more selected from a group consisting of LmNi₄.₇₃Mn_{0.12}Al_{0.15} (lanthanum mischmetal-nickel 4.73 type), TiFe_{0.9}Mn_{0.1} (titanium-iron 0.9 type), Fe_{0.94}Ti_{0.96}Zr_{0.04}Nb_{0.04} (titanium-iron 0.94 type), CaNi₅ (calcium-nickel type), and Lm-Ni type alloy (3) (lanthanum mischmetal-nickel type).
